# EUROPEAN PATENT SPECIFICATION

(11) **EP 0 373 607 B1**
(45) Date of publication and mention of the grant of the patent: **13.04.1994**
(21) Application number: 89122962.7
(22) Date of filing: 12.12.1989
(51) Int. Cl.: G11B 7/09

(54) **Focusing error detection circuit**
Fokusfehlerermittlungsschaltung
Circuit pour la détection des erreurs de mise au point

(30) Priority: 14.12.1988 JP 315673/88
(43) Date of publication of application: 20.06.1990
(73) Proprietor: SONY CORPORATION, Tokyo (JP)
(72) Inventor: Okada, Hitoshi, Shinagawa-ku Tokyo (JP)
(74) Representative: Schmidt-Evers, Jürgen, Dipl.-Ing.

(56) References cited:
- DE-A- 3 723 923
- US-A- 4 023 033
- PATENT ABSTRACTS OF JAPAN vol. 9, no. 276 (P-402)(1999) 02 November 1985;& JP-A-60119642
- IBM TECHNICAL DISCLOSURE BULLETIN vol. 30, no. 2, July 1987, New York, USA "FINE FOCUSING ONTO AN OPTICAL DISK"

## Description

### BACKGROUND OF THE INVENTION

### Field of the Invention

This invention relates to a focusing error detection circuit which may be employed conveniently with, for example, an optical pickup of an optical disk apparatus.

### Related Art Statement

In a conventional apparatus for recording and/or reproducing information signals on or from an optical disk, an optical pickup device is employed, in which a light beam from a semiconductor laser collected by an object lens is irradiated on the recording tracks of an optical disk and the reflected return light from the disk is detected to effect readout and/or writing of the information signals.

Such optical pickup device includes a built-in focusing control unit for controlling an object lens so that the light beam collected by the object lens is irradiated on the recording tracks of the optical lens in the focused state. such focusing control unit performs focusing control by driving a supporting unit, which movably supports the object lens in two directions, that is, along the optical axis of the object lens and along the direction normal to the optical axis and within a horizontal plane, on the basis of the focusing error signals. The supporting unit for supporting the object lens in the two mutually perpendicular directions is shown for example in the US Patent 4473274. The focusing error signals are produced by detecting at a photodetector the state of the reflected return light which is once irradiated on and reflected by the disk surface. For detecting these focusing error signals, there is known a focusing error detection circuit operating in accordance with the astigmatic method such as a disclosed in the US Patent 4023033.

The focusing error detection circuit, operating under the astigmatic system, is arranged as shown in Fig. 13. Thus, in a focusing error detection circuit 1, shown therein, the laser light irradiated on an optical disk, not shown, from an optical pickup, also not shown, is reflected by the disk to form a return beam which then falls on a four-segment photodetector 2 to form a light spot SP.

When the return beam falls on the four-segment detector 2 to form the light spot SP, light reception outputs S_{A}, S_{B}, S_{C} and S_{D} in the form of light reception currents are outputted from first to fourth photodetector segments 2A, 2B, 2C and 2D of the four-segment photodetector 2. The light reception outputs S_{A}, S_{B}, S_{C} and S_{D} are entered into inverting inputs of first to fourth current to voltage converters 3A, 3B, 3C and 3D of the operational amplifier configuration.

The current to voltage converters 3A to 3D are provided with negative feedback paths including R_{A1}, R_{B1}, R_{C1} and R_{D1}, respectively, while having their non-inverting inputs grounded. First to fourth light reception voltages V_{A}, V_{B}, V_{C} and V_{D}, converted from the light reception outputs S_{A}, S_{B}, S_{C} and S_{D}, respectively, are outputted from the output terminals of the converters 3A, 3B, 3C, 3D, respectively.

Of the first to fourth light reception voltage V_{A} to V_{D}, the first and the third light reception voltages V_{A} and V_{C} are transmitted via first and third resistors R_{A2} and R_{C2} of equal resistance values and summed together before being entered into a non-inverting input of a subtractor 4 of an operational amplifier configuration, whereas the second and the fourth light reception voltages V_{B} and V_{D} are transmitted via second and fourth resistors R_{B2} and R_{D2} of equal resistance values and summed together before being entered into an inverting input of the subtractor 4.

This subtractor 4 has a negative feedback path including a resistor R₁, with its non-inverting input being grounded via resistor R2. A differential voltage between the sum voltage of the first and the third light reception voltages V_{A} and V_{C} and the sum voltage of the second and the fourth light reception voltages V_{B} and V_{D} is outputted at an output of the subtractor 4. In this manner, with the focusing error detection circuit 1, the light receiving outputs S_{A} to S_{D} of the four-segment photodetector 2 are computed on the basis of the formula

${\text{S}}_{\text{FE}} {\text{= (S}}_{\text{A}} {\text{+S}}_{\text{C}} {\text{) - (S}}_{\text{B}} {\text{+S}}_{\text{D}} \text{) (1)}$

to produce a focusing error signal S_{FE} in accordance with the astigmatic system.

Meanwhile, the focusing error signal S_{FE} is generated so as to have a voltage waveform in the form of a letter S with respect to the distance between the optical disk and the object lens of the optical pickup device.

Thus the object lens of the optical pickup device is usually controlled by the focusing servo so that the detected focusing error signal S_{FE} will be at a point of intersection P₀ between the central portion of the S-shaped voltage waveform and the zero voltage, called a zero-crossing point, such that the laser light of the optical pickup device is irradiated on the optical disk in the just-focusing state, that is in the correctly focused state.

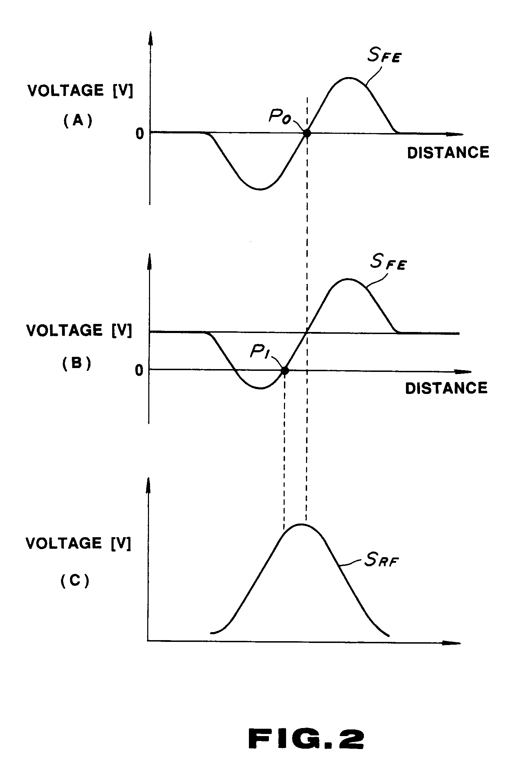

The above described focusing error detection circuit 1 has a drawback that, should d.c. drift occur due to changes in the operating temperature or the environmental temperature of the operational amplifiers of the substractor 4 and the current to voltage converters 3A to 3D, a d.c. offset proportionate to the d.c. offset is superimposed on the focusing error signal S_{FE1} itself, as shown at B in Fig.2, to cause fluctuations in the zero-crossing-point P₁ and hence in the operating point of the focusing servo.

The d.c. offset, proportionate to the d.c. drift, becomes conspicuous above all in the event of significant changes in temperature, when the volume of the incident light into the four segment photodetector 2 is small or when the broad bandwidth d.c. amplifier circuit configuration operational amplifier is used as the operational amplifier of the subtractor 4, such that the RF signal S_{RF} shown at C in Fig. 2 cannot be reproduced correctly.

### Object and Summary of the Invention

It is a principal object of the present invention to provide a focusing error detection circuit wherein the adverse effects of d.c. drift caused by temperature changes may be effectively removed to permit the focusing errors to be detected correctly at all times.

For accomplishing the above object, the present invention is directed to a focusing error detection circuit in which the return laser beam which has once been irradiated from the optical pickup on the recording medium and reflected from the recording medium is received by light receiving means, such as a photodetector, to detect the focusing error of the light beam irradiated from the optical pickup device on the recording medium, wherein, there are provided focusing error computing means for computing focusing errors by arithmetic operation on the basis of a light reception output from said light receiving means to produce a first focusing error signal. Means are provided for generating a d.c. compensated focusing error signal. Such a circuit is known from DE-A-3 723 923.

The invention is characterised by sample-and-hold means for sample-holding said first focusing error signal at the timing of periodical turn-off of said laser light to output a sample-held output, and subtraction means for generating the difference between said first focusing error signal and said sample-held signal to produce said d.c. offset compensated focusing error signal.

With the above described focusing error detection circuit, the first focusing error signal S_{FE10}, computed by the focusing error computing means 11, is sample-held at the timing of the periodic turning off of the laser light, so that it is only the d.c. drift caused by, for example, the temperature changes of the focusing error computing means, that can be sample-held. The sample-held signal is subtracted from the first focusing error signal to produce the second focusing error signal to eliminate the adverse effects of the d.c. drift caused by temperature changes, for example, of the focusing error computing means to enable the focusing error to be detected correctly at all times.

The above and other object and advantages of the present invention will become apparent from the following description of the preferred embodiment of the invention which is made in connection with the accompanying drawings.

### BRIEF DESCRIPTION OF THE DRAWINGS

Fig. 1 is a connection circuit diagram showing a conventional focusing error detection circuit.

Fig. 2 is a signal waveform diagram for illustrating the operation of the circuit shown in Fig. 1.

Fig. 3 is a block circuit diagram showing a focusing error detection circuit according to the present invention.

Fig. 4 is a signal waveform diagram for illustrating the operation of the focusing error detection circuit according to the present invention.

### Detailed Description of Preferred Embodiment

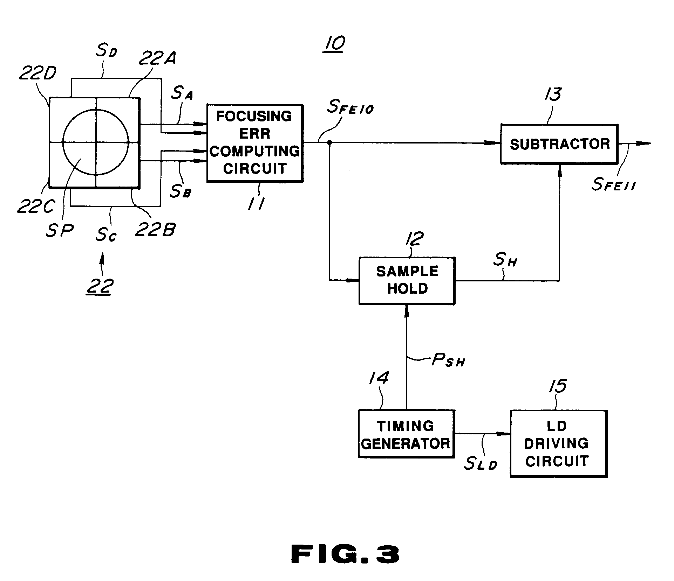

Referring to Fig. 3, an error detection circuit 10 according to the present invention includes a four-segment photodetector 22 for detecting the return beam of a laser light irradiated from an optical pickup, not shown, on an optical disk, also not shown, and reflected from the disk. The reflected return beam from the disk forms a light spot SP on the four-segment photodetector 22.

When the return laser light falls on the four-segment detector 22 to form the light spot SP, light reception current output signals S_{A}, S_{B}, S_{C} and S_{D} are issued from first, second, third and fourth segment 22A, 22B, 22C and 22D of the four-segment photodetector 22, so as to be entered into a focusing error computing circuit 11.

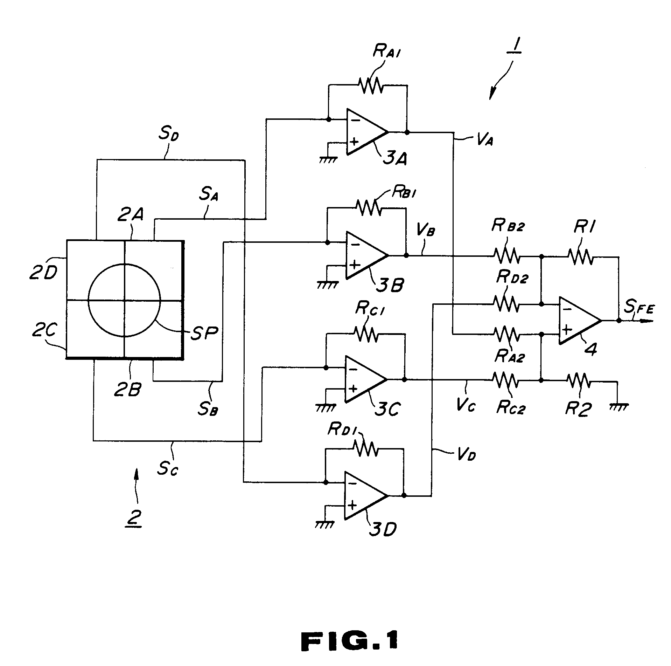

This focusing error computing circuit 11 is configured similarly to the focusing error computing circuit of Fig. 1 and adapted to perform an arithmetic operation of the above mentioned formula (1) on the light reception output signals S_{A} to S_{D} from the photodetector 22 to produce a first focusing error signal S_{FE10} in accordance with the astigmatic system.

With the present detection circuit 10, the first focusing error signal S_{FE10} from the computing circuit 11 is transmitted to a sample-and-hold circuit 12 and a subtractor 13.

The sample-and-hold circuit 12 operates to sample and hold the first focusing error signal S_{FE10}, at the timing of a sampling pulse P_{SH} produced by a timing generator 14, and to transmit the thus produced sample-held signal S_{H} to the subtractor 13.

The subtractor 13 subtracts sample-held signal S_{M} from the first focusing error signal S_{FE10} and outputs the result as a second focusing error signal S_{FE11}.

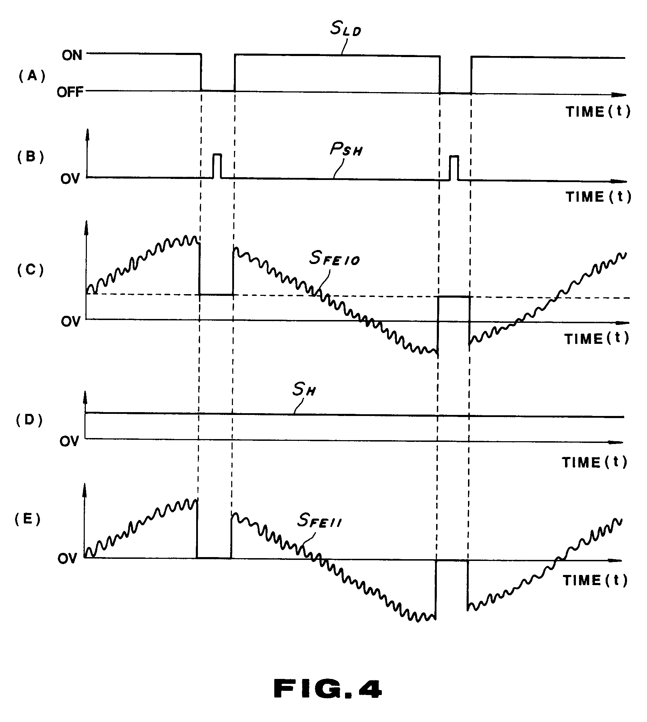

At predetermined constant time intervals, the timing generator 14 transmits a laser driving signal S_{LD} to a laser driving circuit 15, which laser driving signal is shown at A in Fig. 4 and operates to stop the light emitting operation of the laser driving circuit 15 for a short time during which the focusing servo cannot perform a follow-up movement. The timing generator 14 also also transmits sampling pulses P_{SH}, shown at B in Fig. 4, rising at the timing of turning off of the laser, to the sample-and-hold circuit 12.

Thus, with the present embodiment, the first focusing error signal S_{FE10} shown at C in Fig. 4 is sampled at the timing of turning off of the laser to sample-and-hold only the DC offset formed by the d.c. drift in the focusing error computing circuit 11 caused by, for example, changes in the temperature. The sample-held signal S_{H}, formed only by the d.c. offset, as shown at D in Fig. 4, is subtracted from the focusing error signal S_{FE10} to eliminate the effects by the d.c. drift to enable detection of the focusing error signals S_{FE10} having perpetually correct waveform as shown at E in Fig. 4.

With the above described focusing error detection circuit, according to the present invention, the sample-held signal S_{H} is subtracted from the first focusing error signal S_{FE10} to produce the second focusing error signal S_{FE11} to eliminate the effects of the d.c. drift caused by, for example, changes in the temperature in the focusing error computing circuit 11 to enable the focusing errors to be detected correctly at all times.

Also, with the above construction, the d.c. components can be reproduced even when the focusing error computing circuit is the a.c. coupled circuit. Therefore, with the focusing error detection circuit according to the present invention, each operational amplifier of the focusing error computing circuit can be formed by an a.c. amplifier which enables a high-speed arithmetic operation, so that a reliable high-speed focusing servo can be realized.

The above description has been made of the case of turning off the laser at predetermined constant time periods for a short time during which the focusing servo cannot perform a follow-up movement. However, this is not limiting the present invention. For example, when the recording tracks on the optical disk are formed in accordance with a so-called sample format system in which servo areas are provided at intervals of a predetermined period, the present invention may be so designed that the laser light may be turned off in response to the mirror portions of these servo areas.

In this case, since the focusing servo operation itself is performed in the servo areas, the first focusing error output signals from the focusing error computing circuit may be sample-held at the timing of the servo areas before being transmitted to the subtractor.

When video signals, for example, are recorded on the optical disk, the effects similar to those achieved in the above embodiment may be achieved by turning off the laser light at each vertical blanking period.

Although the present invention is applied in the above described embodiment to an optical pickup of an optical disk apparatus in which focusing errors are detected by the astigmatic method, it may aslo be applied to other focusing error detecting methods. The present invention may also be applied extensively to other optical recording/reproducing apparatus than the optical disk apparatus, such as the magneto-optical disk, optical card or optical tape apparatus.

## Claims

1. A focusing error detection circuit for receiving a laser light from a recording medium by light receiving means to detect focusing errors of an optical pickup device, comprising;
focusing error computing means (11) for processing focusing errors by arithmetic operation on the basis of an output from said tight receiving means to produce a first focusing error signal (S_{FE10}), and means for generating a d.c. offset compensated focusing error signal, characterised by
sample-and-hold means (12) for sample-holding said first focusing error signal at the timing of periodical turn-off of said laser light to output a sample-held output (S_{H}), and
subtraction means (13) for generating the difference between said first focusing error signal and said sample-held signal to produce said d.c. offset compensated focusing error signal (S_{FE11}).

2. A focusing error detection circuit according to claim 1, wherein said light reception means include a four-segment photodetector (22), and wherein said focusing error computing means (11) include first and second summation means for computing the sum of output signals of diagonally disposed detection regions of said photodetector (22) and subtraction means for finding by arithmetic operation the difference between the outputs of said first summation means and said second summation means to produce said first focusing error signal (S_{FE10}).

3. A focusing error detection circuit according to claim 1 or 2, further comprising timing generating means (14) adapted for producing a laser driving control signal (S_{LD}) for discontinuing the light emitting operation of said laser driving means (15) for a short time during which the focusing servo cannot perform a follow-up movement, said timing generating means (14) being also adapted for supplying sampling pulses (P_{SH}) to said sample-and-hold means (12) in response to said laser drive control signal (S_{LD})

4. A focusing error detection circuit according to claim 3, wherein said timing generating means (14) detects the mirror portions formed in the servo areas recorded on said recording medium at intervals of a predetermined period for outputting said laser drive control signal (S_{LD}).

5. A focusing error detection circuit according to claim 3 or 4, wherein said timing pulse generating means (14) transmit the sampling pulses (P_{SH}) to said sample-and-hold means (12) at the timing of said servo areas recorded on said recording medium at intervals of a predetermined period.

6. A focusing error detection circuit according to anyone of claims 3 to 5, wherein said timing generating means (14) output said laser drive control signals (S_{LD}) at intervals of a vertical blanking period of a video signal recorded on said recording medium.

## Patentansprüche

1. Fokussierungsfehlererkennungsschaltung zum Empfang eines Laserlichts von einem Aufzeichnungsmedium mittels Lichtempfangsmittel, um Fokussierungsfehler von einer optischen Tonabnehmereinrichtung festzustellen, welche umfaßt:
Fokussierungsfehlerberechnungsmittel (11) zur Bearbeitung von Fokussierungsfehlern mittels einer arithmeischen Operation auf der Basis eines Ausgangssignals von den Lichtempfangsmitteln, um ein erstes Fokussierungsfehlersignal (S_{FE10}) zu erzeugen, und Mittel zur Erzeugung eines kompensierten DC-offsetkompensierten Fokussierungsfehler, gekennzeichnet durch
Abtast- und Haltemittel (12) zum Abtasten und Halten des ersten Fokussierungsfehlersignals während der Zeit der periodischen Umpolung des Laserlichts, um ein abgetastetes und gehaltenes Ausgangssignal (S_{H}) auszugeben, und
Subtraktionsmittel (13) zur Erzeugung der Differenz zwischen dem ersten Fokussierungsfehlersignal und dem abgetasteten und gehaltenen Signal, um das DC-offsetkompensierte Fokussierungsfehlersignal (S_{FE1o}) zu erzeugen.

2. Fokussierungsfehlererkennungsschaltung nach Anspruch 1, bei der die Lichtempfangsmittel einen Vier-Segment-Photodetektor (22) enthalten, und bei der die Fokussierungsfehlerberechnungsmittel (11) erste und zweite Summierungsmittel zum Berechnen der Summe der Ausgangssignale von diagonal verteilten Detektionsbereichen des Photodetektors (22) und Subtraktionsmittel zum Feststellen der Differenz mittels einer arithmetischen Operation zwischen den Ausgangssignalen der ersten Summierungsmittel und der zweiten Summierungsmittel enthalten, um das erste Fokussierungsfehlersignal (S_{FE10}) zu erzeugen.

3. Fokussierungsfehlererkennungsschaltung nach Anspruch 1 oder 2, welche weiterhin Takterzeugungsmittel (14) umfaßt, welche zum Erzeugen eines Lasertreibersteuersignal (S_{LD}) zum Unterbrechen der Lichtaussendetätigkeit der Lasertreibermittel (15) für eine kurze Zeit eingerichtet sind, während der der Fokussierungsservo keine Nachfolgebewegung durchführen kann, wobei die Takterzeugungsmittel (14) außerdem zur Zuführung von Abtastimpulsen (P_{SH}) für die Abtast- und haltemittel (12) als Reaktion auf das Lasertreibersteuersignal (S_{LD}) eingerichtet sind.

4. Fokussierungsfehlererkennungsschaltung nach Anspruch 3, bei der die Takterzeugungsmittel (14) die Spiegelanteile, welche in den Servobereichen ausgebildet sind, die auf dem Aufzeichnungsmedium aufgezeichnet sind, in Intervallen von einer vorgegebenen Periode für die Ausgabe des Lasertreibersteuersignal (S_{LD}) feststellen.

5. Fokussierungsfehlererkennungsschaltung nach Anspruch 3 oder 4, bei der die Taktimpulserzeugungsmittel (14) die Abtastimpulse (P_{SH}) an die Abtast-Halte-Mittel (12) während der Zeit der auf dem Aufzeichnungsmedium in Intervallen von einer vorgegebenen Periode aufgezeichneten Servobereichen übertragen.

6. Fokussierungsfehlererkennungsschaltung nach einem der Ansprüche 3 bis 5, bei der die Takterzeugungsmittel (14) die Lasertreibersteuersignale (S_{LD}) in Intervallen einer vertikalen Austastperiode eines Videosignals, welches auf dem Aufzeichnungsmedium aufgezeichnet ist, ausgeben.

## Revendications

1. Circuit de détection d'erreur de focalisation permettant de recevoir une lumière laser en provenance d'un support d'enregistrement à l'aide d'un moyen de réception de lumière afin de détecter des erreurs de focalisation d'un dispositif de lecteur optique, comprenant :
un moyen de calcul d'erreur de focalisation (11) pour traiter des erreurs de focalisation au moyen d'une opération arithmétique sur la base d'une sortie en provenance dudit moyen de réception de lumière pour produire un premier signal d'erreur de focalisation (S_{FE10}), et un moyen pour générer un signal d'erreur de focalisation à décalage compensé courant continu, caractérisé par :
un moyen échantillonneur et bloqueur (12) pour échantillonner/bloquer ledit premier signal d'erreur de focalisation à l'instant de la coupure périodique de ladite lumière laser afin d'émettre en sortie une sortie échantillonnée/bloquée (S_{H}) ; et
un moyen de soustraction (13) pour générer la différence entre ledit premier signal d'erreur de focalisation et ledit signal échantillonné/bloqué afin de produire ledit signal d'erreur de focalisation à erreur compensée courant continu (S_{FE11}).

2. Circuit de détection d'erreur de focalisation selon la revendication 1, dans lequel ledit moyen de réception de lumière inclut un photodétecteur à quatre segments (22) et dans lequel ledit moyen de calcul d'erreur de focalisation (11) inclut des premier et second moyens de sommation pour calculer la somme de signaux de sortie de régions de détection disposées diagonalement dudit photodétecteur (22) et un moyen de soustraction pour trouver à l'aide d'une opération arithmétique la différence entre les sorties dudit premier moyen de sommation et dudit second moyen de sommation afin de produire ledit signal d'erreur de focalisation (S_{FE10}).

3. Circuit de détection d'erreur de focalisation selon la revendication 1 ou 2, comprenant en outre un moyen de génération de cadencement (14) conçu pour produire un signal de commande de pilotage de laser (S_{LD}) pour rendre discontinue l'opération d'émission de lumière dudit moyen de pilotage de laser (15) pendant une courte période pendant laquelle l'asservissement de focalisation ne peut pas effectuer un déplacement de rappel, ledit moyen de génération de cadencement (14) étant également conçu pour appliquer des impulsions d'échantillonnage (P_{SH}) audit moyen échantillonneur et bloqueur (12) en réponse audit signal de commande de pilotage de laser (S_{LD}).

4. Circuit de détection d'erreur de focalisation selon la revendication 3, dans lequel ledit moyen de génération de cadencement (14) détecte les parties miroirs formées dans les zones d'asservissement enregistrées sur ledit support d'enregistrement selon des intervalles d'une période prédéterminée pour émettre en sortie ledit signal de commande de pilotage de laser (S_{LD}).

5. Circuit de détection d'erreur de focalisation selon la revendication 3 ou 4, dans lequel ledit moyen de génération d'impulsion de cadencement (14) émet les impulsions d'échantillonnage (P_{SH}) pour ledit moyen échantillonneur et bloqueur (12) selon le cadencement desdites zones d'asservissement enregistrées sur ledit support d'enregistrement, selon des intervalles d'une période prédéterminée.

6. Circuit de détection d'erreur de focalisation selon l'une quelconque des revendications 3 à 5, dans lequel ledit moyen de génération de cadencement (14) émet en sortie lesdits signaux de commande de pilotage de laser (S_{LD}) selon des intervalles d'une période de suppression verticale d'un signal vidéo enregistré sur ledit support d'enregistrement.
